# EUROPEAN PATENT APPLICATION

(11) **EP 3 576 473 A1**
(43) Date of publication of application: **04.12.2019**
(21) Application number: 18744901.2
(22) Date of filing: 09.01.2018
(51) Int. Cl.: H04W 72/04

(54) **RADIO COMMUNICATION METHOD AND RADIO COMMUNICATION DEVICE**

(30) Priority: 26.01.2017 CN 201710061802
(71) Applicant: Sony Corporation, Tokyo 108-0075 (JP)
(72) Inventor: ZUO, Huiling, Beijing 100876 (CN); LI, Na, Beijing 100876 (CN); WANG, Haowei, Beijing 100876 (CN); CUI, Tao, Beijing 100028 (CN); WANG, Song, Beijing 100876 (CN); XIE, Yuxuan, Beijing 100876 (CN)
(74) Representative: D Young & Co LLP
(86) International application number: PCT/CN2018/071876
(87) International publication number: WO 2018/137492

(57) **Abstract**

Disclosed are a radio communication method and a radio communication device. The radio communication device comprises a processing circuit. The processing circuit is configured to: configure different resources respectively for the initial transmission and a retransmission of an uplink transmission; and to generate resource indication information, the resource indication information indicating correlations between different resources and the initial transmission and the retransmission of the uplink transmission. In addition, the processing circuit is configured to identify the resource used by the uplink transmission to determine the number of transmissions of the uplink transmission.

## Description

### TECHNICAL FIELD

The present disclosure relates to a radio communication method and a radio communication device, and particularly to a method and a device used for automatic retransmission in an uplink grant-free (UL grant-free) transmission mechanism.

### BACKGROUND

With the development of communication technology, the fifth generation (5G) mobile communication focuses on a wireless network with higher spectrum efficiency, faster rate and larger capacity, and the spectrum efficiency of the fifth generation (5G) mobile communication is required to be increased by 5 to 15 times compared with that of the fourth generation (4G) mobile communication. A new multiple access method, i.e., Non-Orthogonal Multiple Access (NOMA), has been proposed to meet the requirement of 5 to 15 times improvement of the spectrum efficiency. NOMA technology adopts a non-orthogonal transmission and actively introduces interference information at the transmitting side, and performs correct demodulation using serial interference cancellation technology at the receiving side. Although complexity of a receiver is increased, a higher spectral efficiency may be achieved. With the enhancement of chip processing capability, the application of NOMA in practical systems is possible.

Furthermore, the third Generation Partnership Project (3GPP) has planned application scenarios for the fifth generation (5G) mobile communication, including three aspects: enhanced mobile broadband (eMBB), massive machine type communication (mMTC) and ultra-reliable low latency (eMTC). The eMBB is mainly aimed at improving performance of communication among people, and the mMTC and eMTC are directed to application scenario of the Internet of Things. The mMTC is mainly related to information exchange between people and objects, and the eMTC is mainly related to communication among objects.

In addition, for 5G mobile communication, 3GPP has also been studying uplink grant-free transmission scheme. The uplink grant-free transmission refers to that the uplink transmission can be performed immediately after the signal of a terminal device to be transmitted is ready, without transmitting a scheduling request to a base station and receiving an uplink scheduling grant from the base station. The uplink grant-free transmission has the following advantages: (1) the signaling overhead related to the scheduling request and the uplink scheduling grant may be reduced, and (2) the transmission delay caused by the scheduling request and the uplink scheduling grant may be reduced.

### SUMMARY

A retransmission and ACK/NACK feedback scheme for the uplink grant-free transmission mechanism is provided in the present disclosure. In particular, the present disclosure is applicable to an uplink grant-free transmission in mMTC scenario.

An electronic device for wireless communication is provided according to one aspect of the present disclosure. The electronic device includes a processing circuitry configured to configure different resources for a first transmission and a retransmission for an uplink transmission respectively; and generate resource indication information which indicates correspondence between the different resources and the first transmission and the retransmission for the uplink transmission.

An electronic device for wireless communication is provided according to another aspect of the present disclosure. The electronic device includes a processing circuitry configured to determine multiple resource groups used for a first transmission and a retransmission for an uplink transmission respectively; and generate resource grouping information which indicates correspondence between the multiple resource groups and the first transmission and the retransmission using the multiple resource groups.

A communication method performed by a network device is provided according to another aspect of the present disclosure. The method includes determining multiple resource groups used for a first transmission and a retransmission for an uplink transmission respectively; generating resource grouping information and transmitting the resource grouping information to a terminal device, wherein the resource grouping information indicates correspondence between the multiple resource groups and the first transmission and the retransmission using the multiple resource groups; and determining the number of times of the uplink transmission based on the resource group used by the uplink transmission.

An electronic device for wireless communication is provided according to another aspect of the present disclosure. The electronic device includes a processing circuitry configured to determine multiple resource groups used for a first transmission and a retransmission for an uplink transmission respectively based on resource grouping information; and select, with respect to a specific transmission of the uplink transmission, resource used for the specific transmission from the determined resource group used for the specific transmission.

An electronic device for performing wireless communication with multiple communication devices is provided according to another aspect of the present disclosure. The electric device includes a processing circuitry configured to generate multiple feedback signals with respect to multiple messages from the multiple communication devices respectively; and arrange the multiple feedback signals on a single time-frequency domain resource for feeding back to the multiple communication devices.

An electronic device for wireless communication is provided according to another aspect of the present disclosure. The electronic device includes a processing circuitry configured to acquire a feedback signal corresponding to a message transmitted by the electronic device from a position corresponding to the electronic device in a feedback signal group including multiple feedback signals, based on mapping information, wherein the multiple feedback signals are feedback signals with respect to multiple messages transmitted from multiple communication devices including the electronic device, and wherein the mapping information indicates correspondence between the multiple communication devices and positions of the multiple feedback signals for the multiple communication devices in the feedback signal group.

An electronic device for performing wireless communication with multiple communication devices is provided according to another aspect of the present disclosure. The electronic device includes a processing circuitry configured to generate multiple feedback signals with respect to multiple messages from the multiple communication devices respectively; and include the feedback signal for each of the communication devices in downlink control information for the communication device, for transmitting to the communication device.

A computer program code and a computer program product for implementing the method according to present disclosure, and a computer readable storage medium having the computer program code for implementing the method according to the present disclosure stored thereon are also provided according to other aspects of the present disclosure.

The present disclosure designs resource configuration for respective transmissions for uplink transmission and an ACK/NACK feedback scheme for the uplink grant-free transmission scenario. With the technical solution of the present disclosure, it is possible to recognize the number of times of transmission based on the resource used for uplink transmission in the absence of uplink grant, and to efficiently feed back ACK/NACK to a large number of terminal devices.

### BRIEF DESCRIPTION OF THE DRAWINGS

The present disclosure may be better understood by referring to the following description given in connection with the drawings, the same or similar reference numbers are used throughout the drawings to represent the same or similar components. The accompanying drawings together with the following detailed description are incorporated into and form a part of the specification and serve to further illustrate the preferred embodiments of the disclosure and to explain the principle and advantages of the disclosure by way of example. In the drawings:
Figure 1 is a schematic diagram of grouping transmission resources according to the present disclosure.
Figures 2 and 3 illustrate two schemes for selecting resources for retransmission, respectively.
Figure 4 illustrates a signaling flow for the scheme shown in Figure 2.
Figure 5 illustrates a signaling flow for the scheme shown in Figure 3.
Figure 6A schematically illustrates resources used by conventional ACK/NACK feedback scheme.
Figure 6B schematically illustrates resources used by an ACK/NACK feedback scheme according to one example of the present disclosure.
Figure 7 illustrates a main signaling flow of an ACK/NACK feedback scheme according to another example of the present disclosure.
Figures 8A and 8B illustrate respectively explicit mapping and the corresponding feedback signal group according to the present disclosure.
Figure 9 illustrates a signaling flow for the explicit mapping shown in Figures 8A to 8B.
Figure 10 illustrates another signaling flow for the explicit mapping shown in Figures 8A to 8B.
Figure 11A to 11C respectively illustrate implicit mapping and the corresponding feedback signal group according to the present disclosure.
Figure 12 illustrates a signaling flow for the implicit mapping shown in Figures 11A to 11C.
Figure 13 illustrates another signaling flow for the implicit mapping shown in Figures 11A-11C.
Figure 14 schematically illustrates relationship between transmission resources for uplink data packets and transmission resources for the corresponding feedback signal group.
Figure 15 illustrates a schematic block diagram of a base station according to the present disclosure.
Figure 16 illustrates a schematic block diagram of a terminal device according to the present disclosure.
Figure 17 illustrates a schematic block diagram of a smart phone as an example of the terminal device.
Figure 18 illustrates a schematic block diagram of an eNB as an example of the base station.
Figure 19 is a block diagram showing a schematic configuration of computer hardware.

### DETAILED DESCRIPTION OF EMBODIMENTS

In the mMTC scenario, the terminal device is in a discontinuous reception (DRX) state for a long time, and occasionally activated to transmit a small amount of data. However, since a large number of terminal devices exist in the system, the density of terminal devices that are active at the same time is still large, theoretically up to 10⁶ /km². Therefore, the purpose of uplink grant-free transmission in the case of adopting NOMA technology in the mMTC scenario is to transmit a large number of infrequent small data packets with as little overhead and delay as possible.

In the retransmission mechanism of the existing Long Term Evolution (LTE) system, the base station includes a 2-bit redundancy version (RV) in the uplink scheduling grant (UL grant) transmitted to the terminal device. The order of the RV is 0, 2, 3 and 1, which corresponds to a first transmission and retransmissions of the terminal device. However, for the uplink grant-free transmission mechanism with no uplink scheduling grant, it is necessary to design a new scheme such that the base station may recognize the number of times for which the received uplink signal is transmitted.

In view of the above problem, the present disclosure proposes to configure different resources for respective transmissions (including a first transmission and retransmissions) of the uplink transmission, and then determine the number of times of the uplink transmission by the base station based on the recognized resources used for the uplink transmission. Specifically, the base station may divide the transmission resource into multiple resource groups, so that each resource group corresponds to each transmission of the uplink transmission. Then the terminal device selects, with respect to a specific transmission, resources from the corresponding resource group for uplink transmission. The base station determines the number of times of the transmission based on the resource group used for the detected uplink transmission. The uplink transmission includes at least one of data traffic transmission and control information transmission.

In the present disclosure, transmission resource may include physical resource and signature resource. Physical resource may include time domain resource, frequency domain resource, time-frequency domain resource (such as time-frequency resource block), code domain resource, and spatial domain resource. The signature resource may include codebook/codeword, sequence, interleaving and/or mapping pattern, demodulation reference signal, preamble, spatial dimension, power dimension, and the like.

From the perspective of implementation complexity and time flexibility, it is possible to adopt a method of grouping the resources in the frequency domain. The technical solution of the present disclosure will be described mainly by taking the frequency domain resource group as an example. However, it should be noted that the present disclosure is not limited to this, and the solution of the present disclosure may be implemented by grouping the various resources as described above.

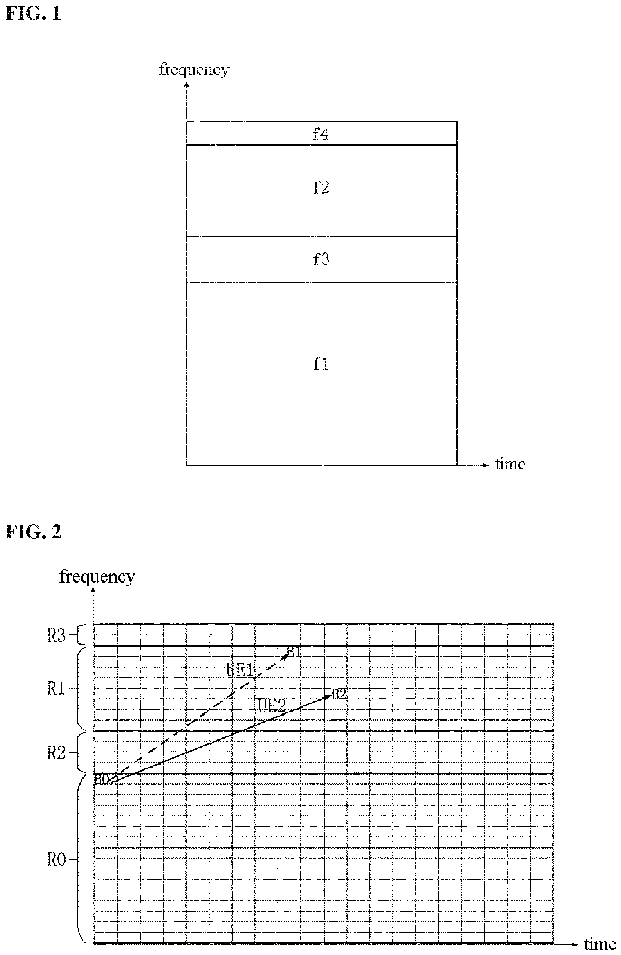

Figure 1 illustrates a schematic diagram of non-uniform grouping of frequency domain resources according to the present disclosure. As shown in Figure 1, the base station divides the frequency domain resources into four frequency bands (four resource groups) f1, f2, f3, and f4, which are used for a first transmission and a first to third retransmissions of the uplink signal, respectively. The bandwidths of the frequency bands are different from each other, that is, the resource groups include different amounts of resource. As such, the grouping method is called non-uniform grouping. The frequency band f1 is used for the first transmission. Preferably, more resources are configured for the resource group used for the first transmission than the resource group used for retransmission. For example, a larger bandwidth is configured for frequency band f1 in this example. Since the first transmission contains all system information and a part of check bits, collision probability at the first transmission may be reduced and the average number of times of transmissions required for successful transmission may be reduced by configuring more resources for the first transmission. A reduced amount of resource is configured for the corresponding resource group as the number of times of transmission increases. As shown in Figure 1, the bandwidths of the frequency bands f2, f3, and f4 for the first to third retransmissions are smaller than the bandwidth of the frequency band f1, and are gradually decreased.

It should be noted that, although Figure 1 illustrates dividing the frequency domain resource into four resource groups, the number of the resource groups is not limited to four. According to an example of the present disclosure, assuming that the maximum numbers of times of retransmissions supported by multiple terminal devices served by the base station are M1, M2, ..., Mn, respectively, the base station may set the number (M) of the resource groups as the largest one of the maximum numbers of times of retransmissions, namely, M = max {M1, M2, ..., Mn}. In addition, although Figure 1 illustrates that four resource groups including different amounts of resource are respectively configured for the first transmission and the first to third retransmissions, the resource groups may include the same amount of resource. For example, in the case of non-adaptive hybrid automatic repeat request (HARQ), the same amount of resource is used for a first transmission and retransmissions.

The base station generates resource grouping information after dividing the resource group, and broadcasts the resource grouping information to the terminal devices in the cell through a Physical Broadcast Channel (PBCH) or a Multicast/Broadcast Single Frequency Network (MBSFN) subframe. The resource grouping information indicates correspondence between multiple resource groups and multiple transmissions of the uplink transmission.

Further, the base station may configure the resource group, for example, based on one or more of network load, channel quality, and service priority. For example, the base station may change, based on the above factors, the number of resource groups, the resource group division manner, the amount of resource included in each group, and the like. For example, the base station may configure different resource groups for different terminal devices based on the service priority of the terminal device. For example, in the case where the network load is small and the channel quality is good, the first transmission is likely to be successful. Therefore, more resources may be configured for the resource group used for the first transmission, and the amount of resource contained in the resource group for retransmission may be reduced. In addition, the base station may configure the resource group in a semi-static manner.

When it comes to grouping of frequency domain resources, it is preferable to adopt frequency hopping to improve anti-interference performance and anti-fading performance. As shown in Figure 1, the frequency bands f1 to f4 for the first transmission and the first to third retransmissions are not sequentially arranged in the frequency domain, but are hopped.

The terminal device may determine, after receiving the resource grouping information, each resource group for each transmission of the uplink transmission. For the first transmission, the terminal device selects a resource from the resource group determined for the first transmission to transmit an uplink signal. For example, the terminal device may randomly select the resource from the resource group for uplink transmission.

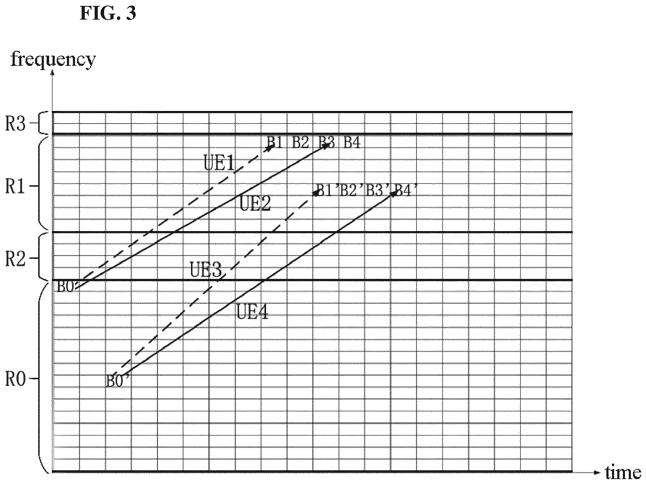

With respect to the selection of the retransmission resource, the terminal device may randomly select the transmission resource in the corresponding resource group, or may select, according to certain rules, the transmission resource from the corresponding resource group. Figure 2 and Figure 3 respectively show the two solutions. In the examples shown in Figures 2 and 3, it is assumed that transmission resources are grouped in the frequency domain, and it is assumed that four resource groups R0 to R3 are divided, which correspond to the first transmission and the first to third retransmissions, respectively.

Referring to Figure 2, it is assumed that two terminal devices UE1 and UE2 select the same time-frequency resource block B0 in the resource group R0 for the first transmission. In the case where the first transmission is not successful, the terminal device UE1 randomly selects a resource block B1 in a resource group R1 to perform the first retransmission, and the terminal device UE2 randomly selects the resource block B2 in the resource group R1 to perform the first retransmission. The resource blocks B1 and B2 are randomly selected by the terminal devices UE1 and UE2 in the resource group R1 for the first retransmission. Although the resource blocks B1 and B2 are shown as two different resource blocks in the resource group R1 in Figure 2, the resource blocks B1 and B2 may be the same resource block. Similarly, if the first retransmission fails, the terminal devices UE1 and UE2 will each randomly select resources for transmission in the resource group R2 for the second retransmission.

In the example shown in Figure 3, when the transmission fails, the terminal device does not randomly select resource for retransmission from the resource group for the next transmission, but selects the resource for retransmission from some available resources included in the corresponding resource group. As shown in Figure 3, it is still assumed that two terminal devices UE1 and UE2 select the same time-frequency resource block B0 in the resource group R0 for the first transmission. In the case where the first transmission is not successful, the terminal device UE1 determines, based on resource association information from the base station, the available transmission resources in the resource group R1 for the first retransmission, and obtains available resource blocks B1, B2, B3 and B4. Then, the terminal device UE1 randomly selects a certain resource block (e.g., resource block B1) among the available resource blocks B1-B4 for the first retransmission.

The resource association information may be generated by the base station and broadcast to the terminal device through PBCH. The resource association information indicates an association between one or more resources in a resource group used for a certain uplink transmission and a resource used for the last uplink transmission. That is to say, the resource used for the last transmission of the signal is associated with the resources which may be used for the current transmission, and the resource used for the current transmission can only be selected from the resources associated with the resource used for the last transmission, instead of being selected randomly. In the example of Figure 3, according to the resource association information configured by the base station, the resource block B0 in the resource group R0 is associated with the resource blocks B1-B4 in the resource group R1. The resource blocks B1-B4 are located at the same position in frequency domain, and at the consecutive positions in time domain. Therefore, the resource blocks B1-B4 are available resources when the terminal device UE1 performs the first retransmission.

In the example of Figure 3, the terminal device UE2 uses the same resource block B0 as the terminal device UE1 at the time of the first transmission. The resource block B0 is associated with the resource blocks B1, B2, B3 and B4 in the resource group R1, according to the resource association information. Therefore, the terminal device UE2 also randomly selects a resource block for the first retransmission, such as the resource block B3, from the available resource blocks B1 to B4.

Figure 3 also illustrates that the terminal devices UE3 and UE4 use another resource block BO' different from the resource block B0 at the time of the first transmission. Similar to the terminal devices UE1 and UE2, in the case where the first transmission fails, the terminal devices UE3 and UE4 may respectively randomly select the resource for the first retransmission from the available resource blocks Bl', B2', B3' and B4' associated with a resource block BO' in the resource group R1. In the same manner, after the first retransmission fails, each terminal device may determine, based on the resource association information, the available resources for the second retransmission in the resource group R2 for the second retransmission, and further select a resource from the available resources for the second retransmission.

Furthermore, when there is an association among multiple terminal devices, the transmission resources for the first transmission and retransmissions of the multiple terminal devices may also be associated. For example, if multiple terminal devices have the same service priority, the multiple terminal devices may select a resource for the first transmission with equal opportunity.

The scheme of random selection of retransmission resources as shown in Figure 2 is advantageous in that the signaling overhead is relatively small. However, the scheme of selecting resources according to a predetermined rule as shown in Figure 3 may greatly reduce the complexity of blind detection at the base station by narrowing the range of resources available to the terminal device, in comparison with the scheme shown in Figure 2.

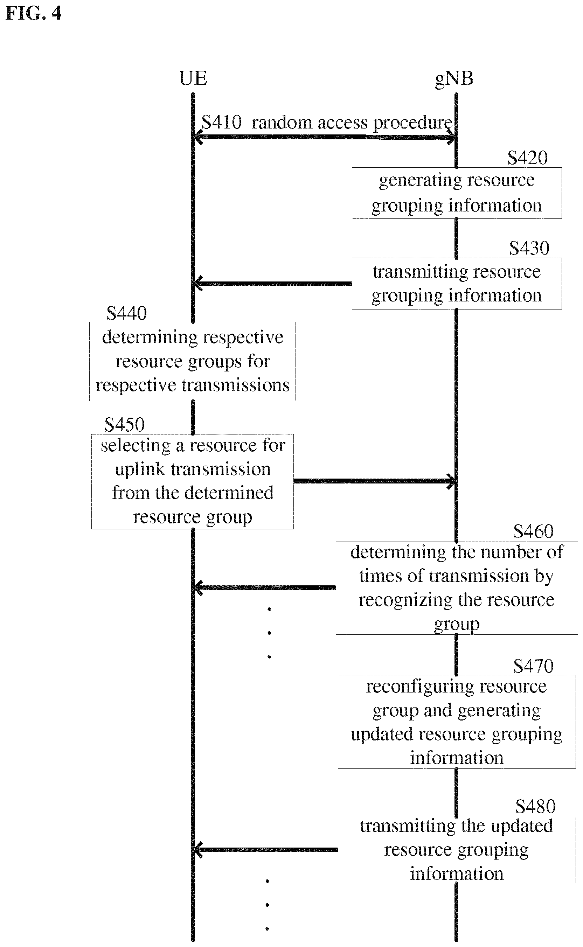

Figure 4 illustrates a signaling flow for the scheme shown in Figure 2. As shown in Figure 4, the terminal device UE and the base station gNB perform conventional random access procedure in step S410. Subsequently, the base station gNB determines multiple resource groups for respective transmissions of the uplink transmission, and generates resource grouping information indicating the correspondence between the respective transmissions and the multiple resource groups in step S420. It should be noted that the execution of steps S410 and S420 is not limited to the order shown in the figure, but may be performed in reverse order. Then, the base station gNB notifies (e.g., broadcasts) the generated resource grouping information to the terminal device UE in step S430. The terminal device UE may determine each resource group for each transmission of the uplink transmission based on the received resource grouping information, as shown in step S440. For a specific transmission, the terminal device UE may randomly select a resource for uplink transmission from the determined resource group, as shown in step S450. The base station gNB may determine the number of times of the uplink transmission by recognizing the resource group used by the terminal device UE for uplink transmission in step S460. In the communication process between the base station gNB and the terminal device UE, for example, in the case where the terminal device UE performs retransmissions for multiple times, step S450 and step S460 may be repeatedly performed. Thereafter, as shown in step S470, in the case where, for example, the channel quality is changed, the base station gNB may reconfigure the resource group and generate updated resource grouping information. Then, the base station gNB notifies the terminal device UE of the updated resource grouping information in step S480, and the terminal device UE determines an updated resource group based on the updated resource grouping information, thereby performing the subsequent processes. The detailed processes are the same as steps S440 to S460, which are omitted here.

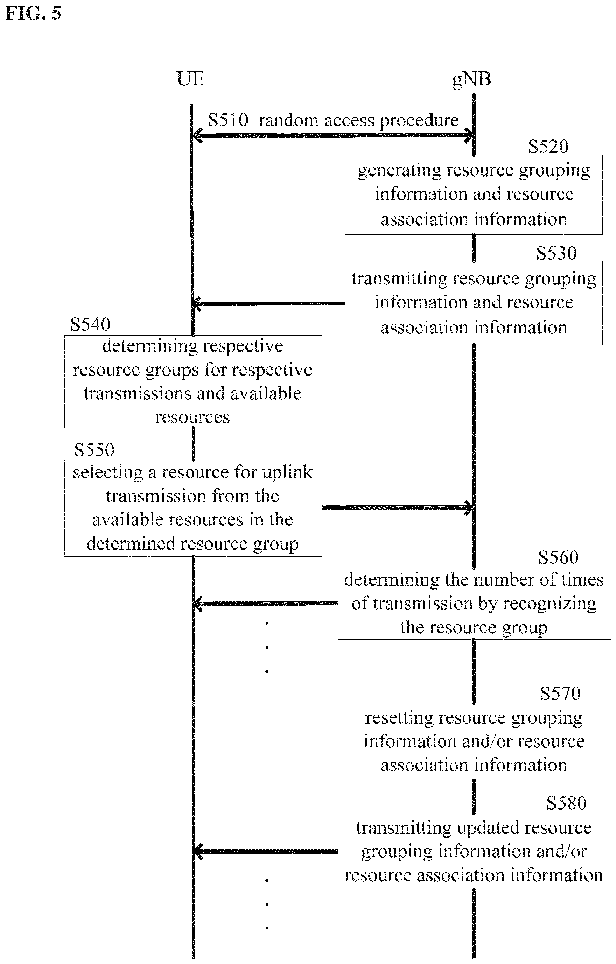

Figure 5 illustrates a signaling flow for the scheme shown in Figure 3. As shown in Figure 5, the terminal device UE and the base station gNB perform conventional random access procedure in step S510. Subsequently, the base station gNB determines multiple resource groups for respective transmissions of the uplink transmission and generates resource grouping information in step S520. Furthermore, the base station gNB generates resource association information. Similarly to Figure 4, steps S510 and S520 in Figure 5 may be performed in reverse order. Then, the base station gNB notifies the generated resource grouping information and the resource association information to the terminal device UE in step S530. The terminal device UE may determine each resource group for each transmission of the uplink transmission based on the received resource grouping information, and may determine an available resource for the next transmission based on the resource association information, as shown in step S540. For a specific transmission, the terminal device UE may randomly select a specific resource for uplink transmission from the available resources of the determined resource group, as shown in step S550. The base station gNB may determine the number of times of the uplink transmission by recognizing the resource group in which the resource used by the terminal device UE for uplink transmission is included in step S560. In the communication process between the base station gNB and the terminal device UE, for example, in the case where the terminal device UE performs retransmissions for multiple times, step S550 and step S560 may be repeatedly performed. Thereafter, as shown in step S570, in the case where, for example, the channel quality or the network load is changed, the base station gNB may reset resource grouping information and/or resource association information, and the base station gNB transmits the updated resource grouping information and/or the updated resource association information to the terminal device UE in step S580. That is to say, in addition to the resource grouping information, the resource association information may also be configured in a semi-static manner by the base station. Then, the terminal device UE determines a new resource group and a new available resource based on the received update information, so as to perform the subsequent uplink transmission. The detailed processes are the same as steps S540 to S560, which are omitted here.

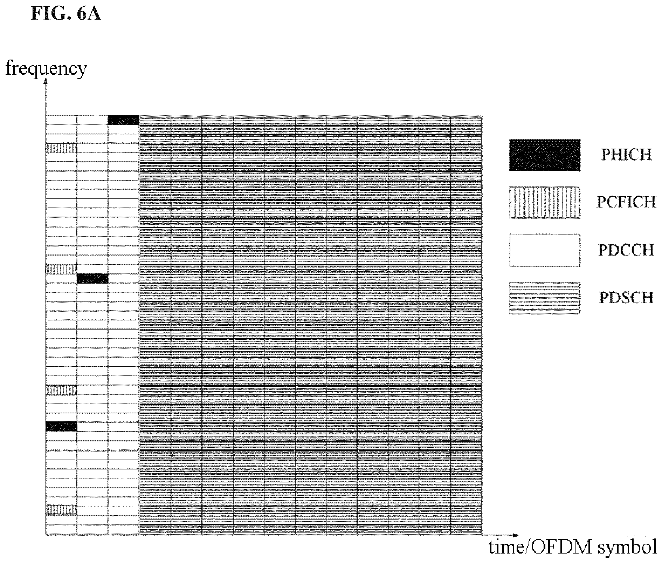

An acknowledgement/negative acknowledgement (ACK/NACK) feedback scheme according to the present disclosure is described below. Figure 6A schematically illustrates resources occupied by a conventional ACK/NACK feedback signal. In the conventional LTE system, a base station transmits an ACK/NACK feedback signal for a terminal device on Physical Hybrid Automatic Repeat Request Indicator Channel (PHICH). As shown in Figure 6A, the PHICH occupies only the first orthogonal frequency division multiplexing (OFDM) symbol or the first three OFDM symbols in a downlink subframe in the time domain, and occupies sparsely-distributed frequency resources in the frequency domain. Therefore, the transmission resources of the PHICH are very limited. However, in the mMTC scenario, the number of terminal devices performing uplink transmission at the same time is very large due to a huge number of terminal devices. Accordingly, the base station transmits a large amount of ACK/NACK feedback signals to respective terminal devices. In this case, it is difficult for the PHICH to satisfy the requirement that the base station transmits a large number of ACK/NACK signals.

In view of the above problem, the present disclosure proposes two new ACK/NACK feedback schemes, including a scheme of feeding back ACK/NACK via Physical Downlink Control Channel (PDCCH) and a scheme of collectively feeding back ACK/NACK by a single feedback signaling.

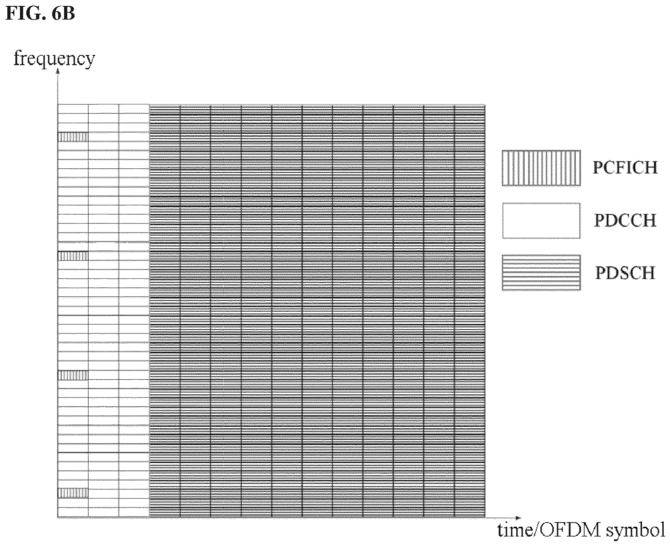

Regarding a first scheme, the base station may transmit an ACK/NACK feedback signal to the terminal device via the PDCCH instead of the PHICH. Since the available transmission resources in the PDCCH is far more than that in the PHICH, the problem of insufficient resource for feeding back ACK/NACK may be solved by using the PDCCH. Figure 6B schematically illustrates resource occupancy according to this scheme. As shown in Figure 6B, the PDCCH is allocated with a large amount of resource, and no PHICH exists. The resources occupied by the PHICH are allocated to the PDCCH. Therefore, the base station may have sufficient resource to transmit ACK/NACK feedback signals for a large number of terminal devices. Preferably, the base station may add 1 bit in downlink control information (DCI) for each terminal device transmitted via the PDCCH, and use this bit to indicate a response (ACK or NACK) for the message transmitted by the terminal device.

Regarding a second scheme, the base station may collectively feed back multiple ACK/NACK feedback signals to multiple terminal devices by using a single time-frequency domain resource. In other words, the base station may transmit to the multiple terminal devices multiple ACK/NACK feedback signals directed to the multiple terminal devices through a single transmission of feedback signaling, without feeding back ACK/NACK to each terminal device through one feedback signaling. In particular, this scheme is applicable to uplink grant-free transmission in the mMTC scenario using NOMA technology.

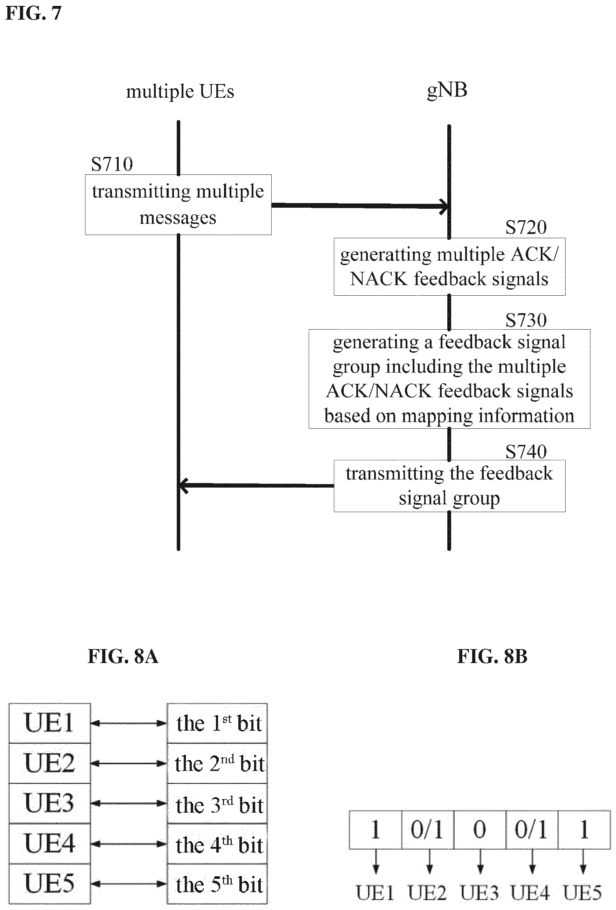

Figure 7 illustrates the main signaling flow according to this scheme. As shown in Figure 7, multiple terminal devices UEs transmit multiple messages to the base station gNB in step S710, and the base station gNB generates multiple ACK/NACK feedback signals for the multiple messages, respectively, in step S720. The base station gNB then combines the generated multiple ACK/NACK feedback signals into one group based on predetermined mapping information in step S730, and feeds back ACK/NACK to the multiple terminal devices UEs by means of a feedback signal group in step S740. As an example of this scheme, multiple terminal devices UEs may use the same transmission resource (such as, time-frequency domain resource) to transmit a message to the base station gNB. As another example of the present scheme, the base station may transmit a feedback signal group in a common search space of the PDCCH.

The length of the ACK/NACK feedback signal group, that is, the number of feedback signals included in the feedback signal group, may be fixed. For example, the length may be set equal to the maximum number of terminal devices which can be served by the base station, that is, the maximum number of terminal devices that can access in the cell. On the other hand, the length of the ACK/NACK feedback signal group may also be variable, and may be adjusted by the base station depending on the change in the number of terminal devices which have currently accessed in the cell. In this case, the length of the ACK/NACK feedback signal group may be shortened, so that the complexity of decoding the ACK/NACK feedback signal group by the terminal device may be reduced to some extent.

In the case of feeding back multiple ACK/NACK feedback signals for multiple terminal devices through a feedback signal group, the terminal device requires to determine which one of the multiple feedback signals included in the received feedback signal group is the feedback signal for the message transmitted by itself. In view of this problem, the present disclosure proposes two feedback mapping schemes, which are separately described below.

Figures 8A and 8B illustrate a first mapping scheme and the corresponding feedback signal group, respectively. In this scheme, there is a correspondence between the identifier (ID) of the terminal device and the position of the ACK/NACK feedback signal for the terminal device in the feedback signal group, which is also referred to as explicit mapping. As shown in Figure 8A, the terminal device UE1 corresponds to the first bit in the feedback signal group, which means that the first bit in the feedback signal group is an ACK/NACK feedback signal for the terminal device UE1. Similarly, the terminal device UE2 corresponds to the second bit in the feedback signal group, the terminal device UE3 corresponds to the third bit in the feedback signal group, and so on. According to the explicit mapping, it is possible to determine the terminal device to which the ACK/NACK feedback signal indicated by each bit in the feedback signal group is directed.

The ACK/NACK feedback signal group generated based on the mapping relationship shown in Figure 8A is shown in Figure 8B. In the example shown in Figure 8B, it is assumed that the same time-frequency domain resource is used by the terminal devices UE1, UE3, and UE5 to transmit a message to the base station, and thus the base station places the ACK/NACK feedback signals are respectively placed, based on the mapping relationship shown in Figure 8A, in positions corresponding to the ACK/NACK feedback signals in the feedback signal group, that is, placed on the first, third, and fifth bits, respectively. For example, "1" in the figure may indicate acknowledgement ACK, and "0" may indicate negative acknowledgement NACK. Furthermore, it is assumed that the terminal devices UE2 and UE4 have not previously transmitted a message to the base station, and thus an ACK/NACK feedback signal for the terminal devices UE2 and UE4 are not generated by the base station. Since the terminal devices UE2 and UE4 do not transmit a message to the base station, even if the feedback signal group is received, the data at the corresponding position is not read. Consequently, arbitrary data ("0" or "1") can be placed by the base station at the second bit and the fourth bit in the feedback signal group.

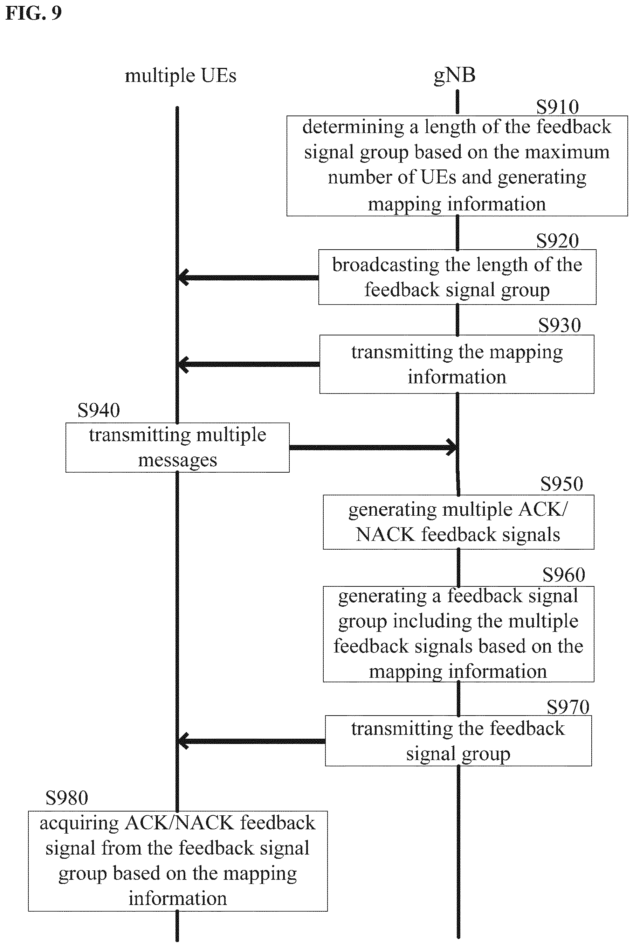

For the above explicit mapping scheme, Figure 9 illustrates a signaling flow between the base station and the terminal device. In the example shown in Figure 9, it is assumed that the length of the feedback signal group is fixed and equal to the maximum number of terminal devices that can access in the cell.

As shown in Figure 9, the base station gNB determines the length of the feedback signal group based on the maximum number of terminal devices that can access in the cell in step S910, and generates mapping information indicating a mapping relationship between the IDs of terminal devices UEs and the positions of the feedback signals of for the terminal devices in the feedback signal group. The base station gNB then broadcasts the length of the ACK/NACK feedback signal group to terminal devices UEs in the cell through the PBCH in step S920, and transmits the generated mapping information to each terminal device UE in step S930. Then, when some terminal devices UEs in the cell transmit messages to the base station gNB using the same transmission resource as shown in step S940, the base station gNB generates multiple ACK/NACK feedback signals in response to the received multiple messages in step S950, and the base station gNB generates a feedback signal group including the multiple ACK/NACK feedback signals based on the mapping information in step S960. Specifically, the base station gNB places, based on the correspondence indicated by the mapping information, an ACK/NACK feedback signal for each terminal device UE that has transmitted the message at the position corresponding to the ID of the terminal device UE in the feedback signal group. For a terminal device UE that does not transmit a message, the base station gNB places arbitrary data at the position corresponding to the ID of the terminal device UE. In addition, if the number of the terminal devices existing in the cell has not reached the maximum number, that is, smaller than the length of the feedback signal group, the base station gNB places arbitrary data at the position in the feedback signal group to which no the terminal device corresponds. Thereby, the base station gNB may generate a feedback signal group. Then, the base station gNB transmits the generated feedback signal group to each of the terminal devices UEs in the cell in step S970. In step S980, the terminal device UE that previously transmitted the message may acquire the ACK/NACK feedback signal based on the mapping information received in step S930 and the feedback signal group received in step S970. A terminal device UE that has not previously transmitted the message will not process the feedback signal group even if it receives the feedback signal group.

In particular, when a new terminal device UE accesses in the cell, the base station gNB may notify, after performing the random access procedure with the terminal device UE, the terminal device UE of the length of the feedback signal group and the position of the ACK/NACK feedback signal corresponding to the terminal device UE in the feedback signal group. Then, the newly accessed terminal device UE may participate in the flow of steps S940 to S980 of Figure 9. In addition, when a terminal device UE has left the cell, the base station gNB may allocate a position corresponding to that terminal device UE in the feedback signal group to a terminal device which will access in the cell in future. It should be noted that, in the case where a new terminal device accesses in the cell, the base station only allocates the corresponding position in the feedback signal group to the terminal device, without changing the position mapping relationship for other existing terminal devices. Similarly, in the case where a terminal device has left the cell, the base station only releases the position corresponding to that terminal device without changing the position mapping relationship for other terminal devices. In this way, the impact on the existing terminal devices may be minimized, so that the signaling overhead for reconfiguration may be reduced.

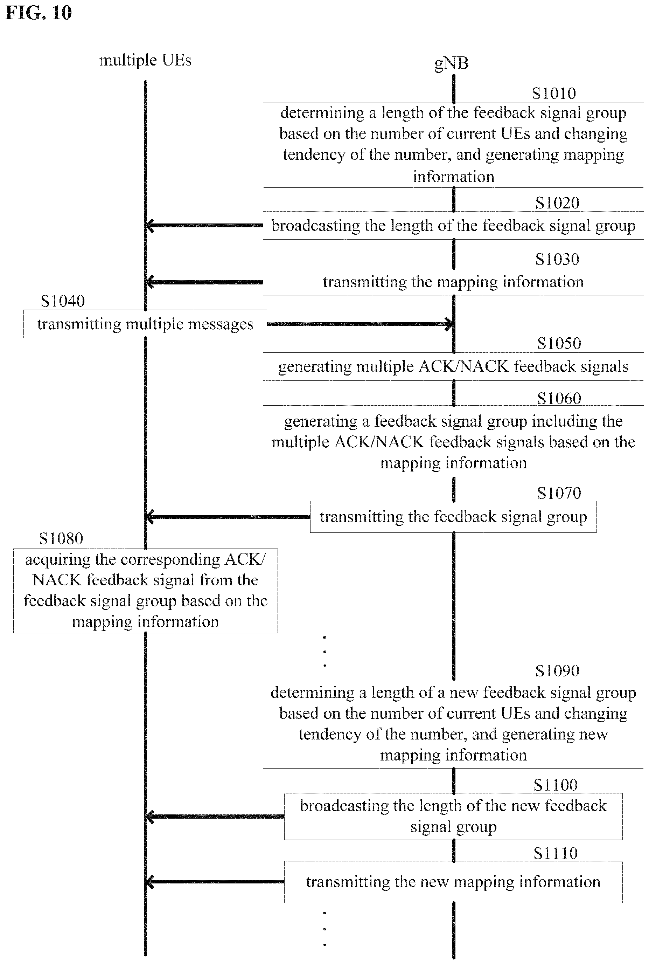

Regarding the explicit mapping scheme, the signaling flow in the case where the length of the feedback signal group is fixed has been described above with reference to Figure 9, and the signaling flow in the case where the length of the feedback signal group is variable will be described below with reference to Figure 10.

As shown in Figure 10, the base station gNB determines the length of the feedback signal group based on the number of the terminal devices which have currently accessed in the cell and the changing tendency of the number of the terminal devices in step S1010, and generates mapping information accordingly. For example, the base station gNB may set the length of the feedback signal group as the sum of the number of the terminal devices which have currently accessed and a certain adjustment value. The adjustment value may be determined based on the changing tendency of the number of the terminal devices, and is used for reserving positions in the feedback signal group for those terminal devices which will access in the cell within a certain period of time. The generated mapping information indicates a mapping relationship between the IDs of terminal devices UEs and the positions of the feedback signals of for the terminal devices in the feedback signal group. The base station gNB then broadcasts the length of the feedback signal group to the terminal devices UEs which have currently accessed in the cell in step S1020, and transmits the generated mapping information to each terminal device UE in step S1030. It should be noted that, although the base station gNB transmits the length of the feedback signal group and the mapping information to the terminal devices UEs in step S1020 and step S1030 respectively in Figure 10, the base station gNB may transmit the length of the feedback signal group and the mapping information together to each terminal device UE by one signaling.

After the terminal devices UEs in the cell respectively transmit messages to the base station gNB as shown in step S1040, the base station gNB generates multiple ACK/NACK feedback signals in response to the received multiple messages in step S1050. Besides, the base station gNB generates, based on the mapping information, a feedback signal group including the multiple ACK/NACK feedback signals in step S1060. Specifically, the base station gNB places, based on the correspondence indicated by the mapping information, an ACK/NACK feedback signal for each terminal device UE that has transmitted the message at the position corresponding to the ID of the terminal device UE in the feedback signal group. For a terminal device UE that does not transmit a message, the base station gNB places arbitrary data at the position corresponding to the ID of the terminal device UE. Thereby, the base station gNB may generate a feedback signal group. Then, the base station gNB transmits the generated feedback signal group to each of the terminal devices UEs which have currently accessed in the cell in step S1070. In step S1080, the terminal device UE that previously transmitted the message can acquire the ACK/NACK feedback signal based on the mapping information received in step S1030 and the feedback signal group received in step S1070. The terminal device UE that has not previously transmitted the message will not process the feedback signal group even if it receives the feedback signal group.

Then, for example after a period of time, the number of the terminal devices UEs that have accessed in the cell may change, and accordingly the base station gNB further determines a length of a new feedback signal group based on the number of terminal devices which have currently accessed in the cell and the changing tendency of the number of the terminal devices, and generates new mapping information accordingly, as shown in step S1090. The base station gNB then notifies respective terminal devices UEs which have currently accessed in the cell of the length of the new feedback signal group and the new mapping information in steps S1100 and S1110. The subsequent processes are similar to steps S1040 to S1080, which are omitted here.

In this example, the base station gNB may periodically configure the length of the feedback signal group and the corresponding mapping information based on the number of the terminal devices UEs which have currently accessed in the cell. The period for reconfiguration may be determined, for example, depending on change frequency of access of the terminal devices UEs. Since the number of the terminal devices UEs which have currently accessed in the cell may be smaller than the maximum number of terminal devices UEs that can access in the cell, the length of the feedback signal group in this example may be shortened in comparison with the example shown in Figure 9. Thereby, the complexity of decoding the ACK/NACK feedback signal group by the terminal device may be reduced.

In particular, in the case where a new terminal device UE accesses to the cell after the base station gNB has determined the length of the feedback signal group and generated the mapping information, since the determined feedback signal group has included a position reserved for the new the terminal device UE as described above, the base station gNB may notify the new terminal device UE of the length of the current feedback signal group and the position of the ACK/NACK feedback signal allocated to the new the terminal device UE after the base station gNB performs a random access procedure with the terminal device UE. It should be noted that the base station gNB may allocate to the terminal device UE the position of the ACK/NACK feedback signal in the current feedback signal group without changing the position mapping relationship for other existing terminal devices. Therefore, the impact on the existing terminal devices is minimized, so that the signaling overhead may be reduced. Subsequently, the newly accessed terminal device UE may participate in the flow of steps S1040 to S1080 of Figure 10.

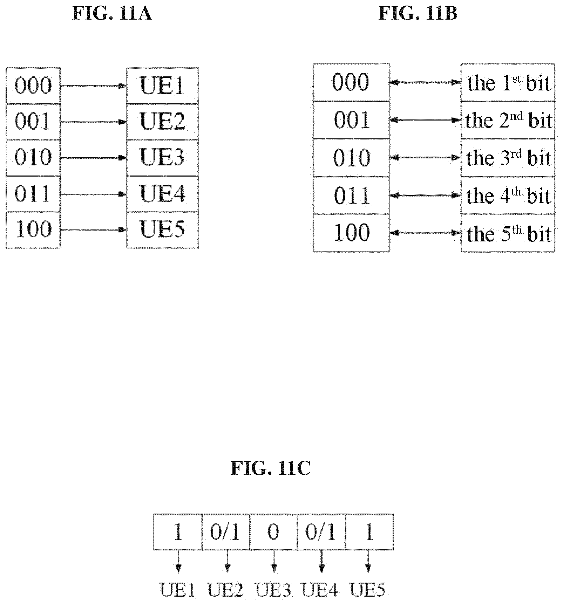

The explicit mapping scheme as the first feedback mapping scheme has been described above, and a second feedback mapping scheme will be described below in connection with Figures 11A to 11C. In this scheme, there is a mapping relationship between the signature assigned to the terminal device and the position of the ACK/NACK feedback signal for the terminal device in the feedback signal group, which is also referred to as implicit mapping.

As shown in Figure 11A, terminal devices UE1 to UE5 are respectively assigned with different signatures in advance. For example, the terminal device UE1 is assigned with a signature "000", and the terminal device UE2 is assigned with a signature "001". Figure 11B illustrates a correspondence between the signatures of the terminal devices UE1 to UE5 and the positions of the ACK/NACK feedback signals for the terminal devices UE1 to UE5 in the feedback signal group. For example, the signature "000" of the terminal device UE1 corresponds to the first bit in the feedback signal group, which means that the first bit in the feedback signal group is the ACK/NACK feedback signal for the terminal device UE1. Similarly, the signature "001" of the terminal device UE2 corresponds to the second bit in the feedback signal group, the signature "010" of the terminal device UE3 corresponds to the third bit in the feedback signal group, and so on. Based on the signatures of terminal devices and the implicit mapping, it is possible to determine the terminal device to which the ACK/NACK feedback signal carried by each bit in the feedback signal group is directed.

The ACK/NACK feedback signal group generated based on the correspondence relationship shown in Figures 11A and 11B is shown in Figure 11C. In the example shown in Figure 11C, it is assumed that the terminal devices UE1, UE3, and UE5 use the same time-frequency domain resource to transmit messages to the base station. The base station places, based on the correspondence between the signatures of the three terminal devices and the positions of the ACK/NACK feedback signals, three ACK/NACK feedback signals for the terminal devices UE1, UE3, and UE5 at the positions corresponding to the three ACK/NACK feedback signals in the feedback signal group respectively, that is, on the first, third, and fifth bits respectively. Assuming that the terminal devices UE2 and UE4 have not previously transmitted a message to the base station, the base station places arbitrary data (0 or 1) on the second and fourth bits in the feedback signal group. It can be seen that in the implicit mapping scheme, the terminal device is not directly mapped to the position of the ACK/NACK feedback signal, but is mapped via the signature assigned to the terminal device.

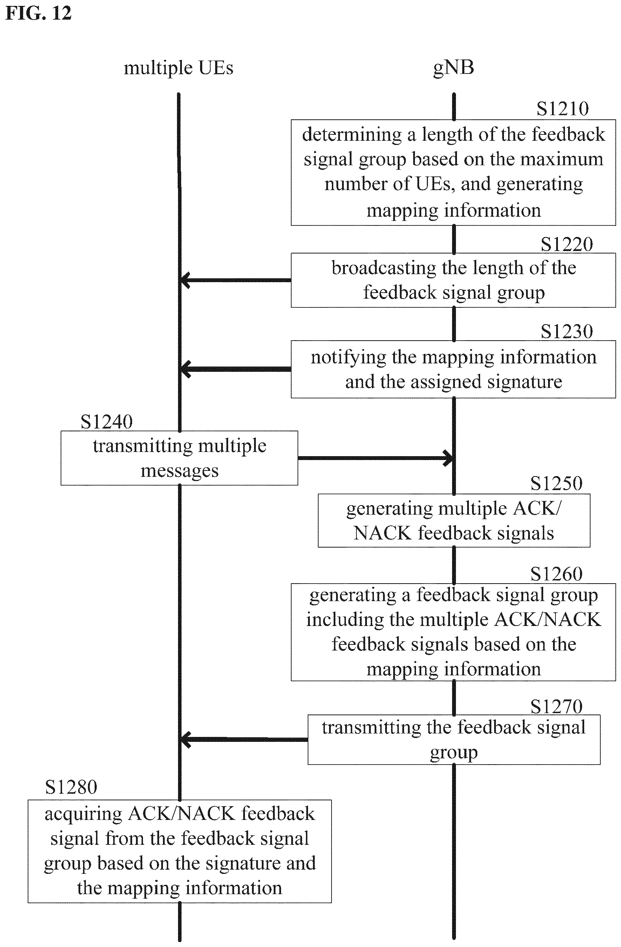

The signaling between the base station and the terminal device in the implicit mapping scheme is described below in connection with Figure 12. In the example shown in Figure 12, it is assumed that the length of the feedback signal group is fixed and equal to the maximum number of terminal devices that can access in the cell.

As shown in Figure 12, the base station gNB determines the length of the feedback signal group based on the maximum number of terminal devices that can access in the cell in step S1210, and generates mapping information indicating a correspondence between the signatures allocated to the terminal devices UEs and the positions of the respective ACK/NACK feedback signals for the respective terminal devices UEs in the feedback signal group. The base station gNB then broadcasts the length of the feedback signal group to each terminal device UE in the cell through the PBCH in step S1220, and notifies the terminal devices UEs of the signatures assigned to the terminal devices UEs and the generated mapping information in step S1230. when some terminal devices in the cell transmit messages to the base station gNB using the same transmission resource as shown in step S1240, the base station gNB generates multiple ACK/NACK feedback signals in response to the received multiple messages in step S1250, and generates a feedback signal group including the multiple ACK/NACK feedback signals based on the mapping information in steps S1260. Specifically, the base station gNB places an ACK/NACK feedback signal for each terminal device UE that has transmitted the message at the position corresponding to the signature of the terminal device UE in the feedback signal group based on the correspondence indicated by the mapping information. For a terminal device UE that does not transmit a message, the base station gNB places arbitrary data at the position corresponding to the signature of the terminal device UE. If the number of existing terminal devices in the cell is smaller than the length of the feedback signal group, the base station gNB places arbitrary data at the position in the feedback signal group to which no terminal device corresponds. Thus, the base station gNB may generate a feedback signal group. Then, the base station gNB transmits the generated feedback signal group to each of the terminal devices UEs in the cell in step S1270. In step S1280, the terminal device UE that previously transmitted the message may acquire the ACK/NACK feedback signal based on the signature and mapping information received in step S1230 and the feedback signal group received in step S1270. A terminal device that has not previously transmitted a message will not process the feedback signal group even if it receives the feedback signal group.

In particular, when a new terminal device UE accesses in a cell, the base station gNB assigns a signature to the new terminal device UE when performing a random access procedure, and notifies, after performing the random access procedure, the terminal device UE of the length of the feedback signal group and mapping information. The mapping information indicates a correspondence between the signatures of the terminal devices UEs and the positions of the ACK/NACK feedback signals for the terminal devices UEs. Subsequently, the newly accessed terminal device UE may participate in the flow of steps S1240 to S1280 of Figure 12. In addition, when a terminal device UE has left the cell, the base station gNB may allocate the position corresponding to the signature of that terminal device UE in the feedback signal group to a terminal device which will access in the cell in future. It should be noted that, in the case where a new terminal device accesses in the cell, or a terminal device has left the cell, base station only configures a part of the mapping information related to the changed terminal device without changing the mapping relationship related to other terminal devices, so that the signaling overhead for reconfiguration may be reduced.

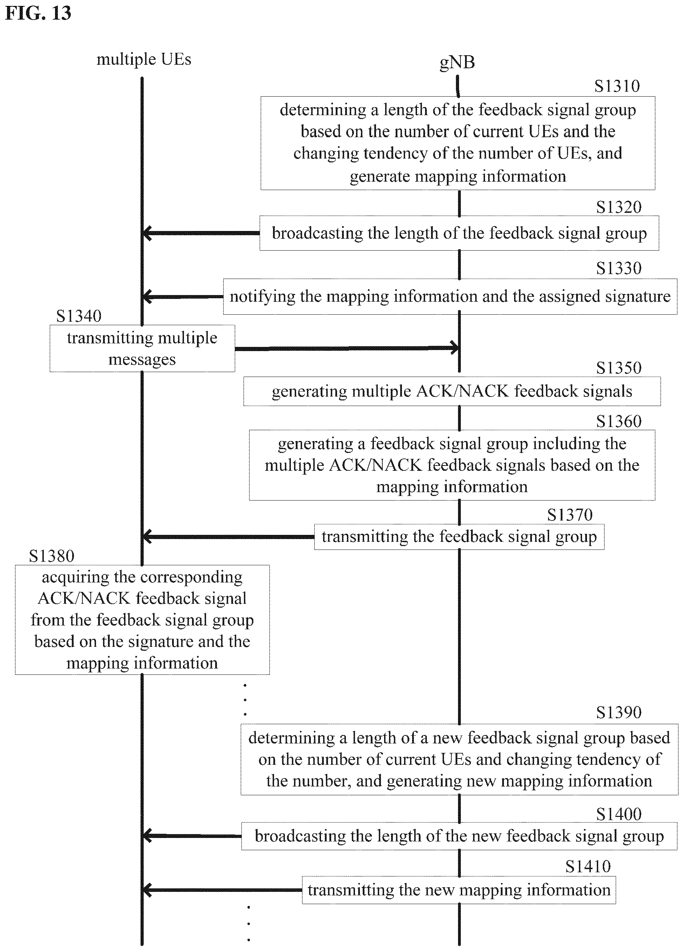

Regarding the implicit mapping scheme, the signaling flow in the case where the length of the feedback signal group is fixed has been described above with reference to Figure 12, and the signaling flow in the case where the length of the feedback signal group is variable will be described below with reference to Figure 13.

As shown in Figure 13, the base station gNB determines the length of the feedback signal group based on the number of terminal devices which have currently accessed in the cell and the changing tendency of the number of the terminal devices in step S1310, and generates mapping information accordingly. For example, the base station gNB may set the length of the feedback signal group as the sum of the number of the terminal devices which have currently accessed and a certain adjustment value. The adjustment value may be determined based on the changing tendency of the number of the terminal devices, and is used for reserving positions in the feedback signal group for those terminal devices which will access in the cell within a certain period of time. The generated mapping information indicates a mapping relationship between the signatures of terminal devices UEs and the positions of the feedback signals for the terminal devices in the feedback signal group. The base station gNB then broadcasts the length of the feedback signal group to the terminal devices UEs which have currently accessed in the cell in step S1320, and notifies the terminal devices UEs of the signatures assigned to the terminal devices UEs and the generated mapping information in step S1330. It should be noted that, although the base station gNB notifies the length of the feedback signal group and the mapping information to the terminal devices UEs in step S1320 and step S1330 respectively in Figure 13, the base station gNB may transmit the length of the feedback signal group and the mapping information together to the terminal devices UEs by one signaling.

Thereafter, as shown in step S1340, some of the terminal devices UEs in the cell respectively transmit messages to the base station gNB, and the base station gNB generates multiple ACK/NACK feedback signals in response to the received multiple messages in step S1350. Also, the base station gNB generates, based on the mapping information, a feedback signal group including the multiple ACK/NACK feedback signals in step S1360. Specifically, the base station gNB places, based on the correspondence indicated by the mapping information, an ACK/NACK feedback signal for each terminal device UE that has transmitted the message at the position corresponding to the signature of the terminal device UE in the feedback signal group. For a terminal device UE that does not transmit a message, the base station gNB places arbitrary data at the position corresponding to the signature of the terminal device UE. Thereby, the base station gNB may generate a feedback signal group. Then, the base station gNB transmits the generated feedback signal group to each of the terminal devices UEs which have currently accessed in the cell in step S1370. In step S1380, the terminal device UE that previously transmitted the message may acquire the ACK/NACK feedback signal based on the signature and the mapping information received in step S1330 and the feedback signal group received in step S1370. The terminal device UE that has not previously transmitted the message will not process the feedback signal group even if it receives the feedback signal group.

Then, for example after a period of time, the number of terminal devices UEs that have accessed in the cell may change, and accordingly the base station gNB determines a length of a new feedback signal group based on the number of terminal devices which have currently accessed in the cell and the changing tendency of the number of the terminal devices, and generates new mapping information, as shown in step S1390. The base station gNB then notifies respective terminal devices UEs which have currently accessed in the cell of the length of the new feedback signal group and the new mapping information in steps S1400 and S1410. The subsequent processes are similar to steps S1340 to S1380, which are omitted here.

In this example, the base station gNB may periodically configure the length of the feedback signal group and the corresponding mapping information based on the number of the terminal devices UEs which have currently accessed in the cell. Since the number of the terminal devices UEs which have currently accessed in the cell may be smaller than the maximum number of terminal devices UEs that can access in the cell, the length of the feedback signal group in this example may be shortened in comparison with the example shown in Figure 12. Thereby, the complexity of decoding the ACK/NACK feedback signal group by the terminal device may be reduced.

In particular, in the case where a new terminal device UE accesses in the cell after the base station gNB has determined the length of the feedback signal group and generated the mapping information, since the base station gNB assigns a signature to the new terminal device UE when performing the random access procedure with the new terminal device, the base station gNB may notify the new terminal device UE of the length of the current feedback signal group and the position of the ACK/NACK feedback signal corresponding to the signature of the new the terminal device UE after the base station gNB performs the random access procedure with the terminal device UE. It should be noted that the base station gNB may allocate to the terminal device UE a position of the ACK/NACK feedback signal in the current feedback signal group without changing the position mapping relationship for other existing terminal devices. Therefore, the impact on the existing terminal devices is minimized and the signaling overhead is reduced. Subsequently, the newly accessed terminal device UE may participate in the flow of steps S1340 to S1380 of Figure 13.

In the ACK/NACK feedback mechanism, it is also necessary to consider the case where the same terminal device UE has transmitted multiple uplink data packets on different transmission resources. In this case, it is required to solve the problem of how to determine the correspondence between multiple data packets transmitted on different resources and multiple ACK/NACK feedback signal groups transmitted by the base station in response to the multiple data packets. In view of this, the present disclosure proposes that, there is a fixed relationship between the resource for transmitting each uplink data packet and the resources for transmitting a feedback signal group for the data packet, and this fixed relationship may be pre-defined by the base station and notified to the terminal device during the random access procedure. Thereby, the terminal device may detect the feedback signal group corresponding to the data packet transmitted by the terminal device on the corresponding resources according to the fixed relationship, and may acquire the ACK/NACK feedback signal for the data packet in the corresponding feedback signal group.

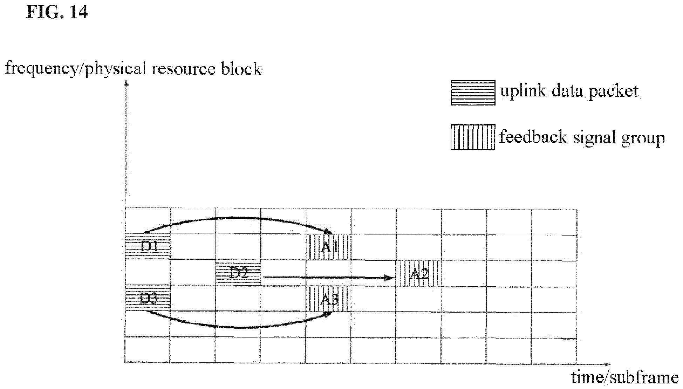

Figure 14 illustrates an example of a fixed relationship between transmission resources for uplink data packets and transmission resources for the corresponding feedback signal group. As shown in Figure 14, it is assumed that a certain terminal device separately transmits a first data packet D1, a second data packet D2, and a third data packet D3 by using different resources. It is specified that, a first feedback signal group A1 corresponding to the first data packet D1 (that is, the ACK/NACK feedback signal for the first data packet D1 is included in the first feedback signal group A1) is transmitted on a resource which occupies, in frequency domain, the same physical resource block (PRB) as that used for transmitting the first data packet D1, and is located, in time domain, at the fourth subframe after the subframe in which the first data packet D1 is transmitted. For example, each PRB may be 12 ^{∗}15KHz = 180KHz. In the same manner, a transmission resource of a second feedback signal group A2 corresponding to the second data packet D2 may be specified based on the resource for transmitting the second data packet D2, and a transmission resource of a third feedback signal group A3 corresponding to the third data packet D3 may be specified based on the resource for transmitting the third data packet D3.

By specifying the relationship between the transmission resource for uplink data packet and the transmission resource for the corresponding feedback signal group in advance, the terminal device may easily detect the feedback signal group corresponding to the data packet transmitted by the terminal device on the corresponding resource. It should be noted that Figure 14 is only a specific example of such fixed relationship, and the present disclosure is not limited thereto. Those skilled in the art may easily make various designs according to actual requirements to enable the terminal device to recognize the feedback signal groups corresponding to the data packets.

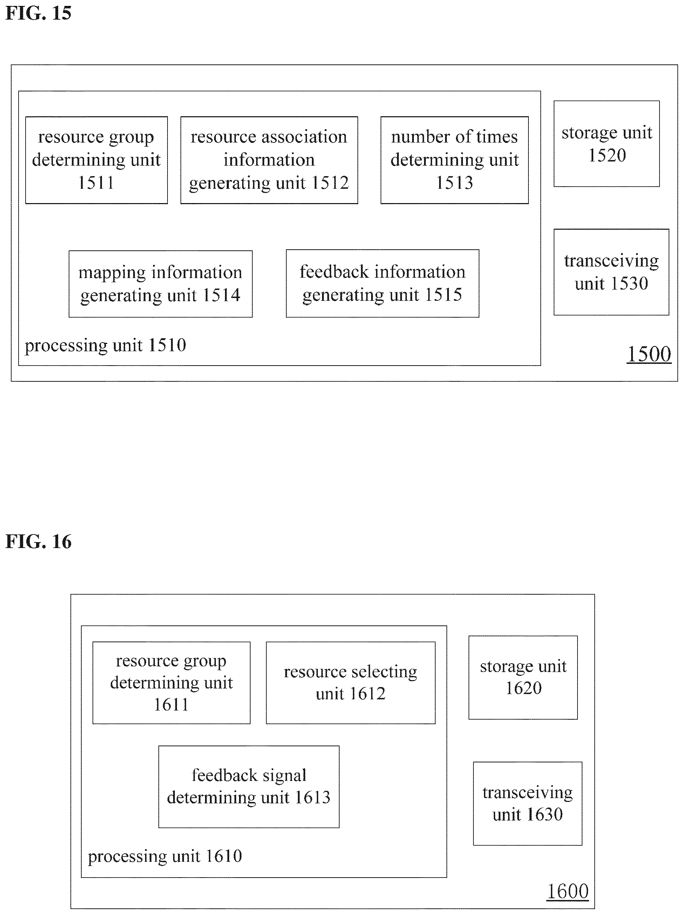

The functional architecture of the base station and the terminal device according to the present disclosure will be described below with reference to Figures 15 and 16. Figure 15 illustrates a schematic block diagram of a base station according to the present disclosure.

As shown in Figure 15, the base station 1500 includes a processing unit 1510, a storage unit 1520, and a transceiving unit 1530. The storage unit 1520 is configured for storing the data required when the processing unit 1510 performs processes, the data generated by performing processes, and the like. And the storage unit 1520 may store the program executed by the processing unit 1510. The transceiving unit 1530 includes one or more antennas for transmitting and receiving signals to and from the terminal devices.

The processing unit 1510 includes a resource group determining unit 1511, a resource association information generating unit 1512, a number of times determining unit 1513, a mapping information generating unit 1514, and a feedback information generating unit 1515.

The resource group determining unit 1511 determines multiple resource groups for a first transmission and retransmissions of uplink data. The amount of resource included in the corresponding resource group decreases as the number of times of the retransmissions of data increases. The resource group determining unit 1511 may determine multiple resource groups on the basis of time domain resources, frequency domain resources, time-frequency domain resources, code domain resources, spatial domain resources, and the like, and may determine multiple resource groups by using frequency hopping to improve anti-interference and anti-fading performance. Then, the resource group determining unit 1511 generates resource grouping information indicating a correspondence between the multiple resource groups and the respective transmissions of the data. The resource grouping information is to be transmitted to the terminal device via the transceiving unit 1530.

Further, when the network load or the channel quality changes, the resource group determining unit 1511 may reconfigure the resource group, for example by changing the number of the resource groups or the amount of resource included in each resource group, and generate updated resource grouping information to be transmitted to a terminal device.

The resource association information generating unit 1512 associates a resource for a certain transmission of the uplink data with a resource for the last transmission of said data, and generates resource association information to be transmitted to the terminal device via the transceiving unit 1530. Furthermore, the resource association information generating unit 1512 may reset the association based on a change in network load or channel quality, and generate updated resource association information.

The number of times determining unit 1513 determines the number of times of the transmissions of the uplink data by recognizing the resource group for transmitting the uplink data when receiving the uplink data from the terminal device. Specifically, the resource grouping information generated by the resource group determining unit 1511 may be stored in the storage unit 1520, and the number of times determining unit 1513 may determine the number of times of the transmissions of the uplink data with reference to the stored resource grouping information.

The mapping information generating unit 1514 generates mapping information to be transmitted to the terminal device via the transceiving unit 1530. The mapping information indicates a mapping relationship between the positions of the multiple ACK/NACK feedback signals in the feedback signal group and the multiple terminal devices. The generated mapping information may be stored in the storage unit 1520. Furthermore, the mapping information generating unit 1514 may reset the mapping relationship according to a change of the terminal device in the cell, and generate updated mapping information.

In an example according to the present disclosure, the feedback information generating unit 1515 generates an ACK/NACK feedback signal for a message from each terminal device. The generated ACK/NACK feedback signal will be carried by 1 bit added to the DCI of the terminal device. Therefore, the generated ACK/NACK feedback signal may be transmitted to the corresponding terminal device through the DCI transmitted on the PDCCH.

In another example according to the present disclosure, the feedback information generating unit 1515 generates multiple ACK/NACK feedback signals for multiple messages transmitted by the multiple terminal devices on the same resource, and then places, based on the mapping information stored in the storage unit 1520, the ACK/NACK signal for each terminal device in a position corresponding to the terminal device in the feedback signal group, thereby forming a feedback signal group including the multiple ACK/NACK feedback signals. The generated feedback signal group will be transmitted to the multiple terminal devices via the transceiving unit 1530.

Figure 16 illustrates a schematic block diagram of a terminal device according to the present disclosure.

As shown in Figure 16, the terminal device 1600 includes a processing unit 1610, a storage unit 1620, and a transceiving unit 1630. The storage unit 1620 is for storing data required when the processing unit 1610 performs processing, data generated by performing processing, and the like. And the storage unit 1620 may store a program executed by the processing unit 1610. The transceiving unit 1630 includes an antenna for transmitting signals to and receiving signals from the base station.

The processing unit 1610 includes a resource group determining unit 1611, a resource selecting unit 1612, and a feedback signal determining unit 1613.

The terminal device 1600 receives resource grouping information and/or resource association information from the base station via the transceiving unit 1630, and the received information may be stored in the storage unit 1620. The resource group determining unit 1611 determines respective resource groups for a first transmission and retransmissions of data based on the received resource grouping information.

In one example according to the present disclosure, for a certain transmission of data, the resource selecting unit 1612 selects a resource group for this transmission, and then randomly selects a resource from the selected resource group to transmit data.

In another example according to the present disclosure, for a certain retransmission of data, the resource selecting unit 1612 firstly selects a resource group for the retransmission, and determines, based on the resource association information stored in the storage unit 1620 and the resource used for the last transmission, one or more available resources in the selected resource group, and then randomly selects a resource from the determined available resources to transmit the data.

Furthermore, after the terminal device 1600 transmits a message to the base station via the transceiving unit 1630, an ACK/NACK feedback signal (included in the feedback signal group) generated for the message and the mapping information may be received from the base station. The mapping information indicates a mapping relationship between multiple terminal devices including the terminal device 1600 and positions of the corresponding ACK/NACK feedback signals in the feedback signal group. The received feedback signal group and mapping information may be stored in the storage unit 1620.

The feedback signal determining unit 1613 acquires, based on the mapping information, the ACK/NACK feedback signal corresponding to the message transmitted by the terminal device 1600 at the position corresponding to the terminal device 1600 in the feedback signal groups including the multiple ACK/NACK feedback signals.

The present disclosure may be applied to various products. For example, the base station or network device in the above-described embodiments may include any type of evolved nodes B (eNB) such as macro eNB and small eNB. The small eNB may be an eNB such as pico eNB, micro eNB and home (femto) eNB that covers a cell smaller than a macro cell. Alternatively, the network side device or base station may include any other type of base station, such as Node B and base transceiver station (BTS). The base station may include a main body (that is also referred to as a base station device) configured to control wireless communication, and one or more remote radio heads (RRH) disposed in a different place from the main body. Further, various types of terminal devices may function as a base station by performing the function of the base station temporarily or semi-permanently.

In another aspect, the terminal device or the user device in the above-described embodiments may be implemented as a communication terminal device (such as smart phone, panel personal computer (PC), notebook PC, portable game terminal, portable/dongle mobile router and digital camera) or an on-board terminal device (such as car navigation device). The terminal device or the user device may also be implemented as a terminal device for performing machine to machine (M2M) communication, which is also referred to as a machine-type communication (MTC) terminal device. Further, the communication device or the user device may be a wireless communication module mounted on each of the above terminals (such as integrated circuit module including a single chip).

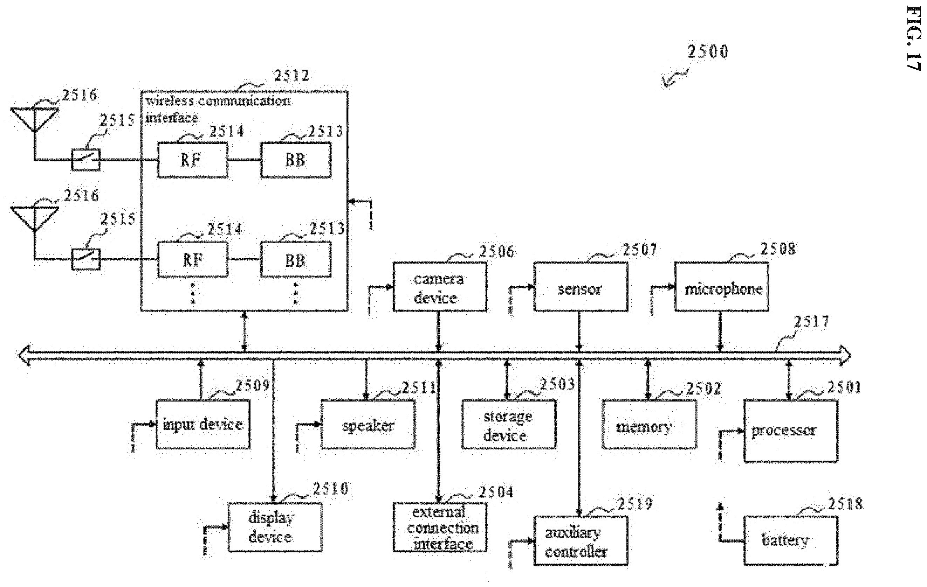

The implementation of the terminal device is described below by taking smart phone as an example in connection with Figure 17.

Figure 17 illustrates a block diagram of a schematic configuration of a smart phone. As shown in Figure 17, the smart phone 2500 includes a processor 2501, a memory 2502, a storage device 2503, an external connection interface 2504, a camera device 2506, a sensor 2507, a microphone 2508, an input device 2509, a display device 2510, a speaker 2511, a wireless communication interface 2512, one or more antenna switches 2515, one or more antennas 2516, a bus 2517, a battery 2518 and an auxiliary controller 2519.

The processor 2501 may be, for example, a CPU or a system-on-chip (SoC), and controls the functions of the application layer and other layers of the smart phone 2500. The memory 2502 includes a RAM and a ROM, and stores a program that is executed by the processor 2501 and data. The storage device 2503 may include a memory medium, such as semiconductor memory and hard disc. The external connection interface 2504 refers to an interface connecting an external device (such as memory card and universal serial bus (USB) device) to the smart phone 2500.

The camera device 2506 includes an image sensor such as charge coupled device (CCD) and complementary metal oxide semiconductor (CMOS), and generates a captured image. The sensor 2507 may include a set of sensors, such as measurement sensor, gyro sensor, geomagnetism sensor, and acceleration sensor. The microphone 2508 converts sounds that are input to the smart phone 2500 into audio signals. The input device 2509 includes a touch sensor configured to detect touch on a screen of the display device 2510, a keypad, a keyboard, a button or a switch, and receives operation and information input from the user. The display device 2510 includes a screen such as liquid crystal display (LCD) and organic light-emitting diode (OLED) display, and displays an image output by the smart phone 2500. The speaker 2511 converts an audio signal output by the smart phone 2500 into sound.

The wireless communication interface 2512 supports any cellular communication scheme (such as LTE and LTE-advanced), and performs wireless communication. The wireless communication interface 2512 may typically include, for example, a BB processor 2513 and an RF circuit 2514. The BB processor 2513 may perform for example coding/decoding, modulation/demodulation and multiplexing/de-multiplexing, and perform various types of signal processing for wireless communication. Meanwhile, the RF circuit 2514 may include for example a frequency mixer, a filter and an amplifier, and transmit and receive a wireless signal via the antenna 2516. The wireless communication interface 2512 may be a chip module with the BB processor 2513 and the RF circuit 2514 integrated therein. As shown in Figure 17, the wireless communication interface 2512 may include multiple BB processors 2513 and multiple RF circuits 2514. However, the wireless communication interface 2512 may also include a single BB processor 2513 or a single RF circuit 2514.

Furthermore, in addition to the cellular communication schemes, the wireless communication interface 2512 may support another type of wireless communication scheme such as short-range wireless communication scheme, near field communication scheme, and wireless local area network (LAN) scheme. In this case, the wireless communication interface 2512 may include a BB processor 2513 and an RF circuit 2514 for each of the wireless communication schemes.

Each of the antenna switches 2515 switches a connection destination of the antenna 2516 among multiple circuits (such as circuits for different wireless communication schemes) included in the wireless communication interface 2512.

Each of the antennas 2516 includes one or more antenna elements (such as multiple antenna elements included in the MIMO antenna), and is used for the wireless communication interface 2512 to transmit and receive wireless signals. As shown in Figure 17, the smart phone 2500 may include multiple antennas 2516. However, the smart phone 2500 may include a single antenna 2516.

In addition, the smart phone 2500 may include antenna 2516 for each wireless communication scheme. In this case, the antenna switch 2515 may be omitted in the configuration of the smart phone 2500.

The bus 2517 connects the processor 2501, the memory 2502, the storage device 2503, the external connection interface 2504, the camera device 2506, the sensor 2507, the microphone 2508, the input device 2509, the display device 2510, the speaker 2511, the wireless communication interface 2512, and the auxiliary controller 2519 to each other. The battery 2518 supplies power to respective components of the smart phone 2500 via feeders which are partially shown with dashed lines in Figure 17. The auxiliary controller 2519 for example performs the minimum function necessary for the smart phone 2500 in a sleep mode.

In the smart phone 2500 as shown in Figure 17, a transceiving device of the terminal device may be implemented with the wireless communication interface 2512. At least a part of the functions of respective functional units of the terminal device may also be implemented with the processor 2501 or the auxiliary controller 2519. For example, a part of functions of the processor 2501 may be performed by the auxiliary controller 2519 and therefore consumption of power of the battery 2518 is reduced. Furthermore, the processor 2501 or the auxiliary controller 2519 may perform at least a part of the functions of respective functional units of the terminal device by executing programs stored in the memory 2502 or the storage device 2503.

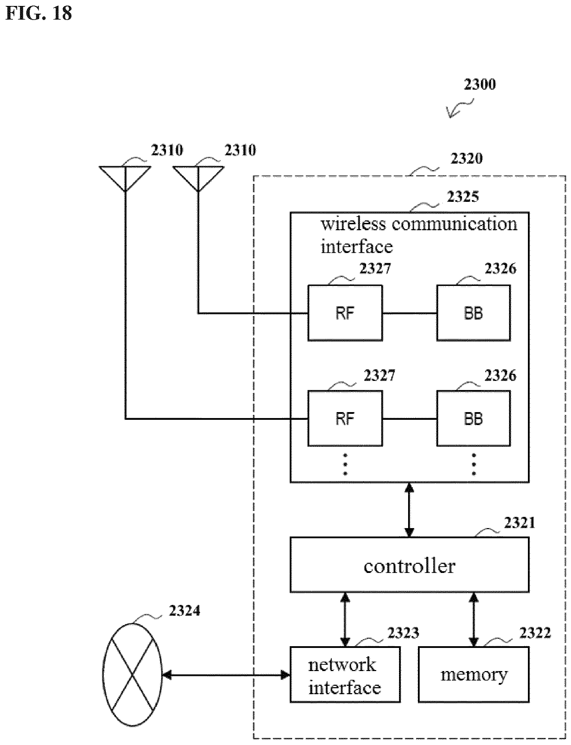

The implementation of the based station is described below by taking eNB as an example in connection with Figure 18.

Figure 18 illustrates a block diagram of a schematic configuration of an eNB. As shown in Figure 18, eNB 2300 includes one or more antennas 2310 and a base station device 2320. The base station device 2320 and each antenna 2310 may be connected to each other via a radio frequency (RF) cable.

Each of the antennas 2310 includes a single or multiple antenna elements (such as multiple antenna elements included in a multi-input multi-output (MIMO) antenna), and is used for the base station apparatus 2320 to transmit and receive wireless signals. The eNB 2300 may include multiple antennas 2310, as illustrated in Figure 18. For example, the multiple antennae 2310 may be compatible with multiple frequency bands used by the eNB 2300. Although Figure 18 illustrates an example where the eNB 2300 includes multiple antennas 2310, the eNB 2300 may include a single antenna 2310.

The base station device 2320 includes a controller 2321, a memory 2322, a network interface 2323, and a wireless communication interface 2325.

The controller 2321 may be for example a CPU or a DSP, and performs various functions of upper layers of the base station device 2320. For example, the controller 2321 generates data packets based on data of a signal processed by the wireless communication interface 2325, and transfers the generated packets via the network interface 2323. The controller 2321 may bundle data from multiple baseband processors to generate a bundle packet, and transfers the generated bundle packet. The controller 2321 may have logical functions of performing control such as radio resource control, radio bearer control, mobility management, admission control, and scheduling. The control may be performed in conjunction with a nearby eNB or a core network node. The memory 2322 includes RAM and ROM, and stores programs to be executed by the controller 2321 and various types of control data (such as a terminal list, transmission power data and scheduling data).

The network interface 2323 is configured to connect the base station device 2320 to a communication interface of the core network 2324. The controller 2321 may communicate with the core network node or another eNB via the network interface 2323. In this case, the eNB 2300 and the core network node or another eNB may be connected to each other via a logic interface (such as S1 interface and X2 interface). The network interface 2323 may be a wired communication interface or a wireless communication interface for wireless backhaul routing. If the network interface 2323 is a wireless communication interface, the network interface 2323 may use a higher frequency band for wireless communication than that used by the wireless communication interface 2325.

The wireless communication interface 2325 supports any cellular communication scheme (such as Long Term Evolution (LTE) and LTE-advanced), and provides a wireless connection to a terminal located in a cell of the eNB 2300 via the antenna 2310. The wireless communication interface 2325 may generally include for example a BB processor 2326 and an RF circuit 2327. The BB processor 2326 may perform for example coding/decoding, modulation/demodulation and multiplexing/demultiplexing, and performs various types of signal processing of layers (such as L1, Media Access Control (MAC), Radio Link Control (RLC) and Packet Data Convergence Protocol (PDCP)). Instead of the controller 2321, the BB processor 2326 may have a portion or all of the above logical functions. The BB processor 2326 may be a memory storing communication control programs, or a module including a processor and relevant circuitry which are configured to execute programs. Update of the program may change the functions of the BB processor 2326. The module may be a card or blade inserted into the slot of the base station device 2320. Alternatively, the module may be a chip that is mounted on the card or the blade. Furthermore, the RF circuit 2327 may include, for example, a mixer, a filter, and an amplifier, and transmits and receives a wireless signal via the antenna 2310.

As shown in Figure 18, the wireless communication interface 2325 may include the multiple BB processors 2326. For example, the multiple BB processors 2326 may be compatible with multiple frequency bands used by the eNB 2300. As shown in Figure 18, the wireless communication interface 2325 may include multiple RF circuits 2327. For example, multiple RF circuits 2327 may be compatible with multiple antenna elements. Although the example in which the wireless communication interface 2325 includes multiple BB processors 2326 and multiple RF circuits 2327 is shown in Figure 18, the wireless communication interface 2325 may include a single BB processor 2326 and a single RF circuit 2327.

In the eNB 2300 shown in Figure 18, a transceiving device of the base station device may be implemented with the wireless communication interface 2325. At least a part of the functions of respective functional units may be performed by the controller 2321. For example, the controller 2321 may perform at least a part of the functions of respective functional units by executing programs stored in the memory 2322.

The various devices or modules described herein are only in the logical sense and do not strictly correspond to any physical devices or entities. For example, the function of each module described herein may be implemented by multiple physical entities, or the functions of multiple modules described herein may be implemented by a single physical entity. Furthermore, it should be noted that, the features, components, elements, steps and the like described in one embodiment are not limited to that embodiment, and may also be applied to other embodiments, for example by replacing specific features, components, elements, steps and the like in other embodiments, or by combining with the same in other embodiments.

The processes executed by each device or module in the above-described embodiments may be implemented by software, hardware, or a combination of the software and the hardware. The programs included in the software may be stored in advance in a storage medium provided inside or outside each device or component. As an example, during execution, these programs are written to a random access memory (RAM) and executed by a processor (for example, a CPU) to perform the processes described in the above embodiments. The present disclosure includes such a computer program code and a computer program product, and a computer readable storage medium having the computer program code recorded thereon.

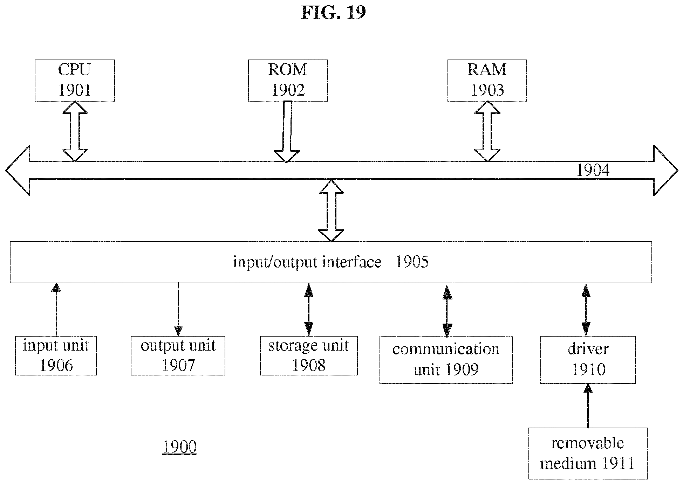

Figure 19 is a block diagram showing an exemplary configuration of computer hardware which implements the solution of the present disclosure based on program.

In computer 1900, a central processing unit (CPU) 1901, a read only memory (ROM) 1902, and a random access memory (RAM) 1903 are connected to each other by a bus 1904.

An input/output interface 1905 is connected to the bus 1904. The input/output interface 1905 is connected to an input unit 1906 formed by a keyboard, a mouse, a microphone, or the like; an output unit 1907 formed by a display, a speaker, or the like; a storage unit 1908 formed by a hard disk, a nonvolatile memory, or the like; a communication unit 1909 formed by a network interface card (such as local area network (LAN) card, modem, etc.); and a driver 1910 that drives a removable medium 1911 such as magnetic disk, optical disk, magneto-optical disk, or semiconductor memory.

In the computer having the above configuration, the CPU 1901 loads the program stored in the storage unit 1908 into the RAM 1903 via the input/output interface 1905 and the bus 1904 and executes the program, to execute the above-described processes.

A program to be executed by a computer (the CPU 1901) may be recorded on the removable medium 1911 which is a package medium including, for example, a magnetic disk (including a floppy disk), an optical disk (including a compact disk-read only memory (CD-ROM), a digital versatile disk (DVD) and the like), magneto-optical disk or semiconductor memory. In addition, the program to be executed by the computer (the CPU 1901) may also be provided via wired or wireless transmission medium such as local area network, Internet or digital satellite broadcasting.

In a case where the removable medium 1911 is installed in the driver 1910, the program may be installed in the storage unit 1908 via the input/output interface 1905. In addition, the program may be received by the communication unit 1909 via a wired or wireless transmission medium, and the program may be installed in the storage unit 1908. Alternatively, the program may be pre-installed in the ROM 1902 or the storage unit 1908.

The program to be executed by the computer may be a program that executes the processes in the order described in the present specification, or may be a program that executes the processes in parallel or executes the process when needed (such as when called).

The embodiments and the technical effects of the present disclosure are described in detail above with reference to the accompanying drawings, but the scope of the present disclosure is not limited thereto. It is to be understood by those skilled in the art that various modifications or changes may be made to the embodiments described herein without departing from the spirit and scope of the present disclosure depending on design requirements and other factors. The scope of the present disclosure is defined by the appended claims or the equivalents thereof.

In addition, the present disclosure may also be configured as follows.

An electronic device for wireless communication is provided. The electronic device includes a processing circuitry configured to configure different resources for a first transmission and a retransmission for an uplink transmission respectively; and generate resource indication information which indicates correspondence between the different resources and the first transmission and the retransmission for the uplink transmission.

A computer readable storage medium having program code stored thereon is provided. The program code, when executed by a processor, causes the processor to be configured to: configure different resources for a first transmission and a retransmission for an uplink transmission respectively; and generate resource indication information which indicates correspondence between the different resources and the first transmission and the retransmission for the uplink transmission.

An electronic device for wireless communication is provided. The electronic device includes a processing circuitry configured to determine multiple resource groups used for a first transmission and a retransmission for an uplink transmission respectively; and generate resource grouping information which indicates correspondence between the multiple resource groups and the first transmission and the retransmission using the multiple resource groups.

The processing circuitry may be further configured to determine the multiple resource groups based on one of time domain resource, frequency domain resource, time-frequency domain resource, code domain resource, and spatial domain resource.

The processing circuitry may be further configured to determine the multiple resource groups by using frequency hopping.

The processing circuitry may be further configured to configure number of the resource groups and the amount of resource included in each of the resource groups based on at least one of network load, channel quality, and service priority.

The processing circuitry may be further configured to determine the multiple resource groups including different amounts of resource respectively, for the first transmission and the retransmission for uplink transmission.

The processing circuitry may be further configured to recognize the resource group used by the uplink transmission; and determine the number of times of the uplink transmission based on the recognized resource group.

The processing circuitry may be further configured to generate resource association information which indicates that one or more resources in a resource group used for a certain uplink transmission are associated with resource used for the last uplink transmission.

The processing circuitry may be further configured to set the resource association information based on at least one of network load and channel quality.

A communication method performed by a network device is provided. The communication method includes: determining multiple resource groups used for a first transmission and a retransmission for an uplink transmission respectively; generating resource grouping information and transmitting the resource grouping information to a terminal device, wherein the resource grouping information indicates correspondence between the multiple resource groups and the first transmission and the retransmission using the multiple resource groups; and determining the number of times of the uplink transmission based on the resource group used by the uplink transmission.

An electronic device for wireless communication is provided. The electronic device includes a processing circuitry configured to determine multiple resource groups used for a first transmission and a retransmission for an uplink transmission respectively based on resource grouping information; and select, with respect to a specific transmission of the uplink transmission, resource used for the specific transmission from the determined resource group used for the specific transmission.

The processing circuitry may be further configured to select the resource used for the specific transmission randomly from the resource group used for the specific transmission.

The processing circuitry may be further configured to determine, based on resource association information, resources associated with resource used for the last uplink transmission in the resource group used for the specific transmission, as available resources used for the specific transmission, wherein the resource association information indicates that one or more resources in a resource group used for a certain uplink transmission are associated with resource used for the last uplink transmission; and select the resource used for the specific transmission randomly from the available resources.

An electronic device for performing wireless communication with multiple communication devices is provided. The electronic device includes a processing circuitry configured to generate multiple feedback signals with respect to multiple messages from the multiple communication devices respectively; and arrange the multiple feedback signals on a single time-frequency domain resource for feeding back to the multiple communication devices.

The processing circuitry may be further configured to generate a feedback signal group including the multiple feedback signals, and feed back the multiple feedback signals to the multiple communication devices by the feedback signal group, wherein the processing circuitry is further configured to arrange, with respect to each communication device, a feedback signal for the communication device at a position corresponding to the communication device in the feedback signal group, based on mapping information, wherein the mapping information indicates correspondence between the respective communication devices and positions of the respective feedback signals for the respective communication devices in the feedback signal group.

The processing circuitry may be further configured to generate the mapping information and control to notify the multiple communication devices of the mapping information.

The mapping information may indicate correspondence between identifiers or signatures of the respective communication devices and positions of the respective feedback signals in the feedback signal group.

The number of feedback signals included in the feedback signal group may be constant.

The number of feedback signals included in the feedback signal group may be equal to a maximum number of the communication devices that can communicate with the electronic device.

The number of feedback signals included in the feedback signal group may be variable.

The processing circuitry may be further configured to configure the number of feedback signals included in the feedback signal group based on the number of the communication devices that are communicating with the electronic device.

The processing circuitry may be further configured to configure the mapping information based on the number of the communication devices that are communicating with the electronic device.

Resource for transmitting the feedback signal group may have a fixed relationship with resource for transmitting messages by each of the multiple communication devices.

An electronic device for wireless communication is provided. The electronic device includes a processing circuitry configured to acquire a feedback signal corresponding to a message transmitted by the electronic device from a position corresponding to the electronic device in a feedback signal group comprising multiple feedback signals, based on mapping information, wherein the multiple feedback signals are feedback signals with respect to multiple messages transmitted from multiple communication devices comprising the electronic device, and wherein the mapping information indicates correspondence between the multiple communication devices and positions of the multiple feedback signals for the multiple communication devices in the feedback signal group.

An electronic device for performing wireless communication with multiple communication devices is provided. The electronic device includes a processing circuitry configured to generate multiple feedback signals with respect to multiple messages from the multiple communication devices respectively; and include the feedback signal for each of the communication devices in downlink control information for the communication device, for transmitting to the communication device.

## Claims

1. An electronic device for wireless communication, comprising a processing circuitry configured to
configure different resources for a first transmission and a retransmission for an uplink transmission respectively; and
generate resource indication information which indicates correspondence between the different resources and the first transmission and the retransmission for the uplink transmission.

2. An electronic device for wireless communication, comprising a processing circuitry configured to
determine a plurality of resource groups used for a first transmission and a retransmission for an uplink transmission respectively; and
generate resource grouping information which indicates correspondence between the plurality of resource groups and the first transmission and the retransmission using the plurality of resource groups.

3. The electronic device according to claim 2, wherein the processing circuitry is further configured to determine the plurality of resource groups based on one of time domain resource, frequency domain resource, time-frequency domain resource, code domain resource, and spatial domain resource.

4. The electronic device according to claim 3, wherein the processing circuitry is further configured to determine the plurality of resource groups by using frequency hopping.

5. The electronic device according to claim 2, wherein the processing circuitry is further configured to configure number of the resource groups and resource amount included in each of the resource groups based on at least one of network load, channel quality, and service priority.

6. The electronic device according to claim 2, wherein the processing circuitry is further configured to determine the plurality of resource groups comprising different resource amounts respectively, for the first transmission and the retransmission for uplink transmission.

7. The electronic device according to claim 2, wherein the processing circuitry is further configured to
recognize the resource group used by the uplink transmission; and
determine the number of times of the uplink transmission based on the recognized resource group.

8. The electronic device according to claim 2, wherein the processing circuitry is further configured to
generate resource association information which indicates that one or more resources in a resource group used for a certain uplink transmission are associated with resource used for the last uplink transmission.

9. The electronic device according to claim 8, wherein the processing circuitry is further configured to set the resource association information based on at least one of network load and channel quality.

10. A communication method performed by a network device, comprising:
determining a plurality of resource groups used for a first transmission and a retransmission for an uplink transmission respectively;
generating resource grouping information and transmitting the resource grouping information to a terminal device, wherein the resource grouping information indicates correspondence between the plurality of resource groups and the first transmission and the retransmission using the plurality of resource groups; and
determining the number of times of the uplink transmission based on the resource group used by the uplink transmission.

11. An electronic device for wireless communication, comprising a processing circuitry configured to
determine a plurality of resource groups used for a first transmission and a retransmission for an uplink transmission respectively based on resource grouping information; and
select, with respect to a specific transmission of the uplink transmission, resource used for the specific transmission from the determined resource group used for the specific transmission.

12. The electronic device according to claim 11, wherein the processing circuitry is further configured to select the resource used for the specific transmission randomly from the resource group used for the specific transmission.

13. The electronic device according to claim 11, wherein the processing circuitry is further configured to
determine, based on resource association information, resources associated with resource used for the last uplink transmission in the resource group used for the specific transmission, as available resources used for the specific transmission, wherein the resource association information indicates that one or more resources in a resource group used for a certain uplink transmission are associated with resource used for the last uplink transmission; and
select the resource used for the specific transmission randomly from the available resources.

14. An electronic device for performing wireless communication with a plurality of communication devices, comprising a processing circuitry configured to
generate a plurality of feedback signals with respect to a plurality of messages from the plurality of communication devices respectively; and
arrange the plurality of feedback signals on a single time-frequency domain resource for feeding back to the plurality of communication devices.

15. The electronic device according to claim 14, wherein the processing circuitry is further configured to
generate a feedback signal group comprising the plurality of feedback signals, and feed back the plurality of feedback signals to the plurality of communication devices by the feedback signal group,
wherein the processing circuitry is further configured to arrange, with respect to each communication device, a feedback signal for the communication device at a position corresponding to the communication device in the feedback signal group, based on mapping information, wherein the mapping information indicates correspondence between the respective communication devices and positions of the respective feedback signals for the respective communication devices in the feedback signal group.

16. The electronic device according to claim 15, wherein the processing circuitry is further configured to generate the mapping information and control to notify the plurality of communication devices of the mapping information.

17. The electronic device according to claim 15, wherein the mapping information indicates correspondence between identifiers or signatures of the respective communication devices and positions of the respective feedback signals in the feedback signal group.

18. The electronic device according to claim 15, wherein the number of feedback signals included in the feedback signal group is constant.

19. The electronic device according to claim 18, wherein the number of feedback signals included in the feedback signal group is equal to a maximum number of the communication devices that can communicate with the electronic device.

20. The electronic device according to claim 15, wherein the number of feedback signals included in the feedback signal group is variable.

21. The electronic device according to claim 20, wherein the processing circuitry is further configured to configure the number of feedback signals included in the feedback signal group based on the number of the communication devices that are communicating with the electronic device.

22. The electronic device according to claim 20, wherein the processing circuitry is further configured to configure the mapping information based on the number of the communication devices that are communicating with the electronic device.

23. The electronic device according to claim 15, wherein resource for transmitting the feedback signal group has a fixed relationship with resource for transmitting messages by each of the plurality of communication devices.

24. An electronic device for wireless communication, comprising a processing circuitry configured to
acquire a feedback signal corresponding to a message transmitted by the electronic device from a position corresponding to the electronic device in a feedback signal group comprising a plurality of feedback signals, based on mapping information,
wherein the plurality of feedback signals are feedback signals with respect to a plurality of messages transmitted from a plurality of communication devices comprising the electronic device, and wherein the mapping information indicates correspondence between the plurality of communication devices and positions of the plurality of feedback signals for the plurality of communication devices in the feedback signal group.

25. An electronic device for performing wireless communication with a plurality of communication devices, comprising a processing circuitry configured to
generate a plurality of feedback signals with respect to a plurality of messages from the plurality of communication devices respectively; and
include the feedback signal for each of the communication devices in downlink control information for the communication device, for transmitting to the communication device.
